# EUROPÄISCHE PATENTSCHRIFT

(11) **EP 2 176 801 B1**
(45) Veröffentlichungstag und Bekanntmachung des Hinweises auf die Patenterteilung: **10.08.2016**
(21) Anmeldenummer: 08785109.3
(22) Anmeldetag: 25.07.2008
(51) Int. Cl.: H05K 1/03, H05K 1/18, H03K 3/00, G06F 17/50, H05K 3/00

(54) **VERFAHREN ZUR KONSTRUKTION VON FLEXIBLEN LEITERPLATTEN MIT HILFE RECHNERGESTÜTZTER WERKZEUGE**
METHOD FOR THE CONSTRUCTION OF FLEXIBLE PRINTED CIRCUIT BOARDS BY MEANS OF COMPUTERISED TOOLS
PROCÉDÉ DE RÉALISATION DE CARTES DE CIRCUITS IMPRIMÉS SOUPLES

(30) Priorität: 26.07.2007 DE 102007035457
(43) Veröffentlichungstag der Anmeldung: 21.04.2010
(73) Patentinhaber: Krebs, Thomas, 90409 Nürnberg (DE)
(72) Erfinder: Krebs, Thomas, 90409 Nürnberg (DE)
(74) Vertreter: Zinsinger, Norbert
(86) Internationale Anmeldenummer: PCT/EP2008/006156
(87) Internationale Veröffentlichungsnummer: WO 2009/013013

(56) Entgegenhaltungen:
- US-A1- 2002 173 867
- US-A1- 2005 287 871
- KREBS T ET AL: "Design of integrated electronic/mechanical products" ELEKTRONIK WEKA-FACHZEITSCHRIFTEN GERMANY, Bd. 54, Nr. 18, 6. September 2005 (2005-09-06), Seiten 60-66, XP002520029 ISSN: 0013-5658
- FELDMANN K ET AL: "COMPUTER-AIDED PLANNING SYSTEMS FOR INTEGRATED ELECTRONIC AND MECHANICAL DESIGN" IEEE TRANSACTIONS ON COMPONENTS,HYBRIDS,AND MANUFACTURINGTECHNOLOGY, IEEE INC. NEW YORK, US, Bd. 16, Nr. 4, 1. Juni 1993 (1993-06-01), Seiten 377-383, XP000400452 ISSN: 0148-6411

## Beschreibung

Die Erfindung betrifft ein Verfahren zur Konstruktion von flexiblen Leiterplatten und flexiblen Verbindungsleitungen.

Flexible Leiterplatten werden in zahlreichen Geräten eingesetzt, in zunehmendem Maße auch in für Automobile bestimmte Komponenten.

Leiterplatten werden computerunterstützt mit Hilfe von sogenannten Leiterplatten-CAD-Systemen entworfen, die eine zweidimensionale Darstellung der Leiterplatte ermöglichen. Dreidimensionale Darstellungen sind möglich, sie beziehen sich jedoch ausschließlich auf die dreidimensionale Darstellung ebener Leiterplatten. Die Leiterplatten-CAD-Systeme sind auf den Entwurf elektrischer bzw. elektronischer Schaltungen zugeschnitten, d. h. sie ermöglichen u. a. die Entflechtung der Verbindungsleitungen.

Für mechanische Systeme stehen CAD-Systeme zu Verfügung, die es erlauben, dreidimensionale Strukturen zu konstruieren. Sie sind jedoch nicht in der Lage, die logischen und elektrischen Aspekte von elektronischen Bauelementen und Baugruppen zu berücksichtigen. Deshalb ist es üblich, im Laufe der Bearbeitung Daten zwischen den beiden Systemen auszutauschen, wobei allerdings die Schnittmenge zwischen den beiden Systemen geringer ist als die für den konstruktiven Entwicklungsprozess benötigte Datenmenge.

Deshalb wird behelfsweise auf Verfahren zurückgegriffen, die die flexible Leiterplatte als ein Blechbiegeteil interpretieren, so dass im wesentlichen schachtelfiörmige Strukturen erzeugbar sind. Weiter ist nachteilig, dass mehrmals der Anpassungsprozess durchlaufen werden muss, so dass ein hoher zeitlicher Aufwand besteht.

In der Veröffentlichung Dr. Thomas Krebs und Dr. Jörg Franke: "Konstruktionswerkzeuge für elektronisch/mechanisch integrierte Produkte", Elektronik 18/2005, Seiten 60-66, ISSN: 0013-5658, wird ein 3D-CAD-System für elektro/mechanisch-integrierte Produkte vorgestellt, das bekannte Funktionen zur Schaltungs-Layoutentwicklung - wie Netzliste einlesen, Bauelemente platzieren, Leiterbild verdrahten und Design Rules überprüfen - mit den vielfältigen Möglichkeiten zur räumlichen Modellierung und Darstellung in einem Entwicklungswerkzeug verbindet.

In der US 2005/287871 A1 werden eine Vorrichtung, ein Verfahren und ein Programm zum computergestützten Entwurf von flexiblen Leiterplatten beschrieben. Dabei werden anhand von katalogisierten Bauelementeabmessungen "verbotene" Zonen ermittelt, in denen eine Kollision von nach dem Biegen der flexiblen Leiterplatte einander gegenüberliegenden Bauelementen eintritt.

In der US 2002/0173867 A1 beschreibt ein System für die Erleichterung der Entwicklung und Produktion in einer multidisziplinären CAD-Umgebung. Das System verbindet zwei Workstationen mit CAD-Applikationen aus unterschiedlichen Ingenieursdisziplinen miteinander, wobei auf einem Server eine multidisziplinäre Universal-CAD-Bibliotheksanwendung ausgeführt wird und die beiden Workstationen und der Server durch ein Netzwerk miteinander verbunden sind.

Die Veröffentlichung Klaus Feldmann und Jörg Franke: "Computer-Aided Planning Systems for Integrated Electronic and Mechanical Design", IEEE TRANSACTIONS ON COMPONENTS, HYBRIDES, AND MANUFACTURINGTECHNOLOGY, Bd. 16, Nr. 4, Seiten 377-383 ISSN: 0148-6411, gibt einen Überblick über neue Anforderungen zur Handhabung dreidimensionaler Daten in der Gestaltung elektronischer Produkte, insbesondere von 3-D-MID's ("molded interconnection devices). Dabei werden unterschiedliche CAD-Programme angewendet, um Anforderungen zu erfüllen, die sich aus der dreidimensionalen platzsparenden Anordnung und elektrischen Verbindung der Bauelemente durch flexible Leiterplatten ergeben.

Aufgabe der vorliegenden Erfindung ist es, ein verbessertes Verfahren für den Entwurf flexibler Leiterplatten anzugeben.

Erfindungsgemäß wird diese Aufgabe mit dem Gegenstand des Anspruchs 1 gelöst. Es wird ein Verfahren zur computergestützten Konstruktion von flexiblen Leiterplatten vorgeschlagen, die in einem Gehäuse eines Gerätes angeordnet sind, wobei vorgesehen ist, dass folgende Schritte einmal oder mehrmals durchlaufen werden:
a) Erstellen eines 3D-Modells des Gehäuses,
b) Bestimmen von Fixpunkten der Leiterplatte, wie Befestigungspunkten und Anschlusspunkten, mit Angabe jeweils eines auf einer Innenwandfläche des Gehäuses (10) errichteten und nach innen weisenden Normaleneinheitsvektors und der Durchlaufrichtung,
c) Bestimmen von Verbindungsebenen, die die Fixpunkte enthalten,
d) Berechnung eines Skelettmodells der Leiterplatte, wobei zwischen zwei benachbarten Fixpunkten mit unterschiedlichem Normaleneinheitsvektor die Schnittgerade der die Fixpunkte aufweisenden Verbindungsebenen bestimmt wird,
e) Ersetzen der Schnittgeraden durch einen Verbindungsabschnitt, wobei die die Schnittgerade ausbildenden Verbindungsebenen tangential in den Verbindungsabschnitt übergehen,
f) Erstellung einer Abwicklung des Skelettmodells in eine Ebene,
g) Festlegen einer das Skelettmodell einschließenden vorläufigen Leiterplattenkontur,
h) Erstellen eines Leiterplattenentwurfs, umfassend eine präzisierte Leiterplattenkontur und ein Leiterplattenlayout, in der Abwicklung,
i) Einfügen von virtuellen Bauelementen in den Leiterplattenentwurf;
k) Rückübertragen des mit den virtuellen Bauelementen bestückten Leiterplattenentwurfs in das 3D-Modell des Gehäuses,
l) Ermittlung und Korrektur der Kollisionen zwischen den virtuellen Bauelementen einerseits und der Leiterplattenkontur oder der Innenkontur des Gehäuses im 3D-Modell des Gehäuses andererseits oder zwischen den virtuellen Bauelementen untereinander oder der Leiterplattenkontur mit sich selbst,
m) Durchlaufen der Schritte h) bis k) sooft, bis keine Kollision mehr auftritt, wobei die Schritte a) bis m) in der oben genannten Reihenfolge oder in anderer Reihenfolge ausgeführt werden.

Der Begriff "virtuelles Bauelement" weist darauf hin, dass es sich in der Entwurfsphase nicht um ein reales Bauelement handelt, sondern um ein Modell des realen Bauelements, das mindestens die Außenkontur des realen Bauelements, also geometrische Daten, sowie elektromagnetische Daten umfasst, die die Wechselwirkung des realen Bauelements mit benachbarten Bauelementen nachbilden. Beispielsweise kann ein Modell eines elektromagnetischen Übertragers, zum Beispiel ein Niederfrequenzübertrager, neben seiner geometrischen Form (Anschlusspins, Außenkontur) Daten über sein elektromagnetisches Streufeld aufweisen, das zum Beispiel auf einen benachbarten elektromagnetischen Übertrager als elektromagnetisches Störfeld einwirken kann sowie thermische Eigenschaften, beispielsweise Angaben zur Verlustwärme, die im Betrieb von dem Übertrager abgegeben wird.

Der Verfahrensschritt a) - das Erstellten des dreidimensionalen Modells des Gehäuses mit dem gewünschten Verlauf der Leiterplatte - ist wie der Verfahrensschritt b) - Bestimmen von Fixpunkten der Leiterplatte, wie Befestigungspunkten und Anschlusspunkten, mit Angabe jeweils eines auf einer Innenwandfläche des Gehäuses errichteten und nach innen weisenden Normaleneinheitsvektors und der Durchlaufrichtung - dazu vorgesehen, um Ausgangswerte für die folgenden Verfahrensschritte zu bestimmen. Im weiteren Verfahren können jedoch Korrekturen an den Ausgangswerten vorgesehen sein, ohne das Verfahren in Frage zu stellen. Der Umfang möglicher Korrekturen ist u. a. davon abhängig, ob ein fertiges Gehäuse vorliegt, oder ob auch das Gehäuse lediglich als Entwurf vorliegt.

So kann beispielsweise eine Korrektur der Befestigungspunkte der Leiterplatte erforderlich sein, weil nach dem Entwurf des Leiterplattenlayouts ein oder mehrere Bauelemente den freien Zugang zu den Befestigungspunkten behindern, deren Lage zur Einhaltung funktioneller Bedingungen nicht veränderbar ist.

Es ist auch möglich, Verfahrensschritte vollständig oder teilweise in einer anderen Reihenfolge abzuarbeiten, ohne das erfindungsgemäße Verfahren zu verlassen. Beispielsweise kann zunächst der Verfahrensschritt d) - Berechnung eines Skelettmodells der Leiterplatte - ausgeführt sein und sodann der Verfahrensschritt c) - Bestimmen von Verbindungsebenen, die die Fixpunkte enthalten - vorgesehen sein oder es können beide Verfahrensschritte als iterativer Prozess durchgeführt werden.

Es ist bekanntlich ein Merkmal des konstruktiven Entwicklungsprozesses, dass Rücksprünge auf vorhergehende Entwicklungsschritte vorgesehen sein können, jedoch aus wirtschaftlichen Erwägungen auf Einzelfälle beschränkt bleiben sollen. Das erfindungsgemäße Verfahren zeichnet sich dadurch aus, dass der Entwurf der flexiblen Leiterplatte sowohl in einer dreidimensionalen als auch in einer zweidimensionalen Entwicklungsumgebung vorgenommen wird und dass beide Entwicklungsumgebungen determiniert miteinander verknüpft sind. Im Verfahrensschritt a), dem Erstellen des 3D-Modells des Gehäuses, werden markante Gehäusepunkte als dreidimensionale Koordinaten bestimmt, wobei die in Verfahrensschritt b) zu bestimmenden Fixpunkte entweder bereits in der Menge der markanten Gehäusepunkte enthalten sein können oder dieser Menge hinzugefügt werden.

Deshalb kann im Allgemeinen der Leiterplattenentwurf nach dem Erstellen des Skelettmodells zielgerichtet durchgeführt werden, und es wird für jeden Entwicklungsschritt die optimale Entwicklungsumgebung bereitgestellt. Zur Entwicklung der Leiterplattenkontur und des Leiterplattenlayouts ist eine 2D-Umgebung vorgesehen, zur Ermittlung und Korrektur von Kollisionen eine 3D-Umgebung. Dadurch kann der Zeitablauf für die Erstellung der Fertigungsunterlagen der Leiterplatte signifikant verkürzt werden.

Es kann vorgesehen sein, dass in Verfahrensschritt a) das 3D-Modell des Gehäuses in einem Datenspeicher eines Computers abgelegt wird und dass in Verfahrensschritt b) die Fixpunkte der Leiterplatte aus dem Datenspeicher entnommen werden.

Weiter kann vorgesehen sein, dass das in Verfahrensschritt d) berechnete Skelettmodell im Datenspeicher des Computers abgelegt wird.

Es kann ach vorgesehen sein, dass die virtuellen Bauelemente im Datenspeicher des Computers abgelegt sind.

Es wird deutlich, dass die Verfahrensschritte des erfindungsgemäßen Verfahrens zwar körperliche Elemente, wie Leiterplatten oder Bauelemente betreffen, diese Elemente jedoch im Entwicklungsprozess als numerische Daten im Datenspeicher des Computers abgelegt sind. Diese Daten können beispielsweise über die geometrischen Eigenschaften des elektronischen Bauelements hinausgehen und in einem virtuellen Bauelement zusammengefasst sein. Zur Interaktion mit einem menschlichen Entwickler können unterschiedliche Formen der Darstellung der Daten vorgesehen sein, beispielsweise zweidimensionale und/oder dreidimensionale zeichnerische Darstellung auf einem Bildschirm oder eine tabellarische Darstellung von Parametern oder Messwerten. Die Verarbeitung der Daten kann vorzugsweise im Computer mittels eines oder mehrerer Programme erfolgen, es können aber auch Entscheidungen des am Computer tätigen Entwicklers abgefragt werden, die den weiteren Entwicklungsprozess steuern.

Weitere vorteilhafte Ausbildungen sind auf die Verbindungsabschnitte gerichtet.

Es kann vorgesehen sein, dass der Verbindungsabschnitt als gekrümmte Fläche ausgebildet ist.

Vorteilhafterweise kann vorgesehen sein, dass die gekrümmte Fläche als Zylinderfläche, vorzugsweise als Abschnitt eines Hohlzylinders ausgebildet ist. Die Zylinderfläche ist durch den Zylinderradius und die Achsrichtung bestimmt, die Bestimmung des tangentialen Übergangs in ebene Abschnitte der Leiterplatte ist mit geringem Berechnungsaufwand verbunden. Weiter weist die Zylinderfläche den Vorteil auf, dass infolge des konstanten Krümmungsradius keine zusätzlichen Maßnahmen zur Fixierung der flexiblen Leiterplatte benötigt sind, um die Zylinderfläche dauerhaft auszubilden.

Weiter kann vorgesehen sein, dass der Verbindungsabschnitt als Kegelfläche ausgebildet ist, vorzugsweise als Abschnitt eines Hohlkegelstumpfes ausgebildet ist. Die Kegelfläche weist unterschiedliche Biegeradien aus, die mit zunehmendem Abstand von der Grundfläche des Kegels bzw. des Kegelstumpfes abnehmen. Dadurch können sich im Material der flexiblen Leiterplatte Spannungen ausbilden, die der Verformung entgegenwirken, so dass u. U. zusätzliche Fixierungspunkte im Verbindungsabschnitt und/oder in der Umgebung des Verbindungsabschnitts zur Fixierung der Leiterplatte vorzusehen sind.

In einer weiteren vorteilhaften Ausbildung kann vorgesehen sein, dass der Verbindungsabschnitt als Schraubenfläche ausgebildet ist. Eine Schraubenfläche kann beispielsweise vorgesehen sein, um Längsbewegungen oder rotatorische Bewegungen auszugleichen, die beispielsweise bei ausziehbaren oder schwenkbaren Gehäusekomponenten auftreten können.

Es kann weiter vorgesehen sein, dass der Verbindungsabschnitt als Spiralfläche ausgebildet ist. Ein derartiger Verbindungsabschnitt kann beispielsweise alternativ zu dem vorstehend beschriebenen als Schraubenfläche ausgebildeten Verbindungsabschnitt vorgesehen sein, wobei weiter auch vorgesehen sein kann, dass die Spiralfläche bedarfsweise zu einer Schraubenfläche auseinandergezogen wird, beispielsweise, um eine oder mehrere von der flexiblen Leiterplatte durchgriffene Gehäusekomponenten sowohl herausziehbar als auch schwenkbar auszubilden.

Vorteilhafterweise kann vorgesehen sein, dass Biegeradien gewählt werden, die größer als der Biegeradius sind, bei dem der lineare Elastizitätsbereich des Leiterplattenmaterials bei einer vorbestimmten Leiterplattendicke verlassen wird.

Es kann vorgesehen sein, dass die zulässigen Biegeradien aus einer Vorzugstabelle ausgewählt werden. Die Vorzugstabelle kann als Datensatz abgelegt sein, auf den eine nach dem erfindungsgemäßen Verfahren arbeitende Konstruktionssoftware zugreifen kann.

Es kann vorgesehen sein, dass zwei aufeinander folgende parallele Verbindungsebenen durch eine orthogonale Verbindungsebene verbunden werden. Es ist aber auch möglich, eine anders verlaufende Verbindungsebene vorzusehen, insbesondere dann, wenn die Innenkontur des für die Aufnahme der flexiblen Leiterplatte bestimmten Gehäuses einen anderen Verlauf erzwingt oder nahelegt.

Weiter kann vorgesehen sein, dass zwei aufeinanderfolgende nicht parallele Verbindungsebenen durch eine Verwindungsfläche verbunden werden. Die Verwindungsfläche kann vorteilhafterweise so bestimmt werden, dass die flexible Leiterplatte ohne äußere Krafteinwirkung die vorbestimmte Flächenkontur annimmt.

Vorteilhafterweise kann vorgesehen sein, dass die Verwindungsfläche mit einem Verwindungsradius ausgebildet ist, der größer als der Verwindungsradius ist, bei dem der lineare Elastizitätsbereich des Leiterplattenmaterials verlassen wird.

In einer weiteren vorteilhaften Ausbildung ist vorgesehen, dass im Verfahrensschritt l) unzulässige elektromagnetische und/oder thermische Beeinflussungen der auf der flexiblen Leiterplatte angeordneten Bauelemente und/oder Leiterbahnen untereinander ermittelt und korrigiert werden. Es ist möglich, dass in der Abwicklung der Leiterplatte Beeinflussungen nicht auftreten, weil die kritischen Bauelemente auf der abgewickelten Leiterplatte einen so großen Abstand aufweisen, dass eine Beeinflussung nicht eintritt oder vernachlässigbar ist. Jedoch können die Bauelemente im eingebauten Zustand der Leiterplatte einander so angenähert sein, dass die Beeinflussung eintritt und nicht vernachlässigbar ist. Übertrager, insbesondere Hochfrequenz-Übertrager, und Schwingkreise können beispielsweise kritische Bauelemente oder Baugruppen sein. Bei den Bauelementen handelt es sich im Entwurfsprozess, wie weiter oben ausgeführt, um virtuelle Bauelemente. Es ist jedoch möglich, dass das virtuelle Bauelement nicht alle relevanten Eigenschaften des realen Bauelements abbildet. Es ist folglich nicht auszuschließen, dass Messungen an einem mit realen Bauelementen bestücktes Fertigungsmuster Abweichungen zu den am mit virtuellen Bauelementen bestückten Modell berechneten Parametern zeigen. Erforderliche Änderungen können mit dem erfindungsgemäßen Verfahren jedoch jederzeit leicht vorgenommen werden, wobei vorteilhafterweise vorgesehen sein kann, künftig ein virtuelles Bauelement mit verbesserter Modellstruktur zu verwenden.

Weiter kann vorgesehen sein, dass die Leiterplattenkontur so gewählt wird, dass innerhalb der Leiterplattenkontur kein Überlappungsbereich von Verbindungsabschnitten angeordnet ist. Dies würde zur Folge haben, dass die flexible Leiterplatte in solchen Bereichen mehrfach gebogen werden müsste, was im Allgemeinen zu plastischer Verformung und Rissen führen kann.

Es kann vorgesehen sein, dass das Verfahren auf Flachbandkabel oder auf Bündel von Rundleiterkabeln angewendet wird. Wenngleich die Verlegung von Kabeln weniger Probleme bereitet, so kann doch das erfindungsgemäße Verfahren auch mit Vorteil auf Kabel oder Kabelbäume angewendet werden.

Die Erfindung wird nun anhand von Ausführungsbeispielen näher erläutert. Es zeigen
- Fig. 1: eine schematische dreidimensionale Darstellung eines zum Einbau einer flexiblen Leiterplatte vorgesehenen Gehäuses mit eingezeichneten Fixpunkten;
- Fig. 2: eine schematische dreidimensionale Darstellung eines in das Gehäuse in Fig. 1 eingebrachten Skelettmodells der flexiblen Leiterplatte;
- Fig. 3: eine schematische Draufsicht eines aus dem Skelettmodell in Fig. 2 entwickelten ersten Leiterplattenentwurfs;
- Fig. 4: eine schematische Draufsicht eines aus dem ersten Leiterplattenentwurf in Fig. 3 entwickelten zweiten Leiterplattenentwurfs;
- Fig. 5: eine schematische dreidimensionale Darstellung des in das Gehäuse in Fig. 1 zurückübertragenen Leiterplattenentwurfs in Fig. 4.

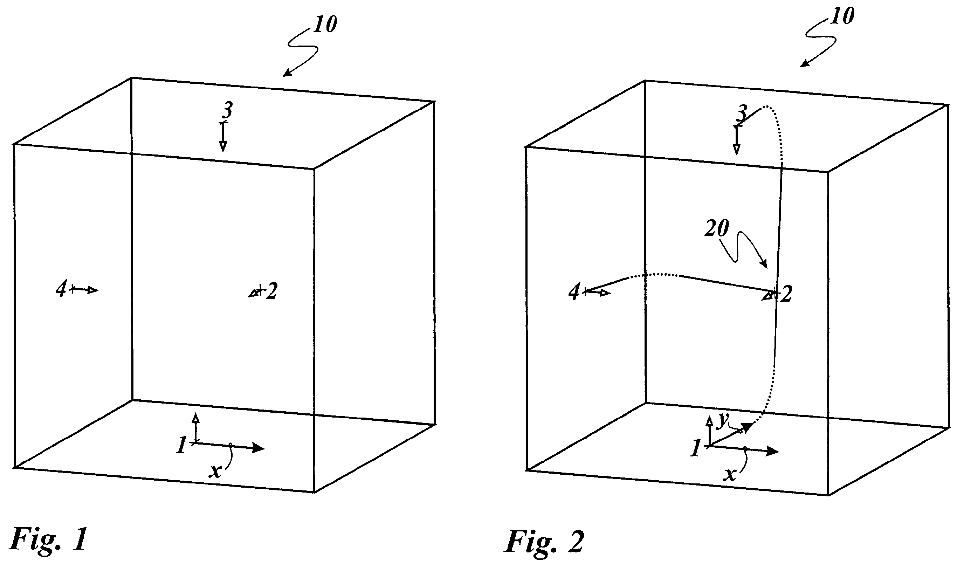

Fig. 1 zeigt ein Skelettmodell eines quaderförmigen Gehäuses 10, das zum Einbau einer flexiblen Leiterplatte bestimmt ist. Das Skelettmodell weist keine Wandstärke auf und umschließt den Innenraum des Gehäuses 10. In dem Gehäuse sind Fixpunkte 1 bis 4 vorgesehen, auf denen jeweils ein auf der Innenwandfläche errichteter und nach innen weisender Normaleneinheitsvektor eingezeichnet ist. Das Skelettmodell des Gehäuses 10 kann beispielsweise aus einem körperlichen Modell des Gehäuses abgeleitet sein. Es kann aber auch aus einer zeichnerischen Darstellung des Gehäuses 10 abgeleitet sein, beispielsweise aus zweidimensionalen Ansichten und/oder Schnitten, wie sie für Konstruktionszeichnungen üblich sind, oder auch aus einer dreidimensionalen Darstellung, vorzugsweise aus bemaßten Darstellungen. Die Fixpunkte 1 bis 4 der Leiterplatte werden vorzugsweise durch den Entwickler des Gehäuses nach technischen Gesichtspunkten vorgegeben.

Auf den Fixpunkt 1 ist weiter der Nullpunkt eines kartesischen Koordinatensystems gelegt, das im Weiteren die Verbindung zwischen dem in dreidimensionaler Ansicht dargestellten Gehäuse 10 und in zweidimensionaler Ansicht dargestellten Leiterplattenentwürfen herstellt.

Die Fixpunkte 2 bis 4 sind folglich als Punkte Pᵢ = Pᵢ(_{Xi}, yᵢ, zᵢ) in 3D-Ansicht bzw. Pᵢ' = Pᵢ' (xᵢ, yᵢ) in 2D-Ansicht eindeutig einander zugeordnet.

Fig. 2 zeigt nun ein aus den Fixpunkten 1 bis 4 entwickeltes räumliches Skelettmodell 20 der flexiblen Leiterplatte, das gerade und gekrümmte Abschnitte aufweist. Die Abschnitte des Skelettmodells gehören Verbindungsebenen an, die jeweils mindestens einen der Fixpunkte enthalten. Die Verbindungsebenen können beispielsweise parallele Ebenen zu den Innenwänden des Gehäuses 10 bilden, wie in Fig. 2 dargestellt.

Zwischen zwei benachbarten Fixpunkten mit unterschiedlichem Normaleneinheitsvektor wird nun die Schnittgerade der die Fixpunkte aufweisenden Verbindungsebenen bestimmt. In dem in Fig. 2 dargestellten Ausführungsbeispiel fallen die Schnittgeraden mit den Innenkanten des Gehäuses 10 zusammen.

Wie weiter in Fig. 2 dargestellt, sind die Schnittgeraden durch einen gekrümmten Verbindungsabschnitt ersetzt, der in dem Skelettmodell 20 jeweils als ein Kreisbogenabschnitt ausgebildet ist. Es handelt sich bei den gekrümmten Verbindungsabschnitten in dem in Fig. 2 dargestellten Ausführungsbeispiel also um Mantelabschnitte von Kreiszylindern. Wegen der konstanten Krümmung von Kreiszylindern kann diese Ausbildung des Verbindungsabschnitts bevorzugt sein, wobei ein die Krümmung des Verbindungsabschnitts bestimmender Krümmungsradius so gewählt sein kann, dass er dem minimal zulässigen Krümmungsradius entspricht, bei dem keine dauerhafte Verformung bzw. kein Knicken des Leiterplattenmaterials eintritt. Der minimal zulässige Krümmungsradius kann in Abhängigkeit von der Materialart und der Leiterplattendicke in einer Datenbank eines computergestützten Konstruktionsprogramms abgelegt sein.

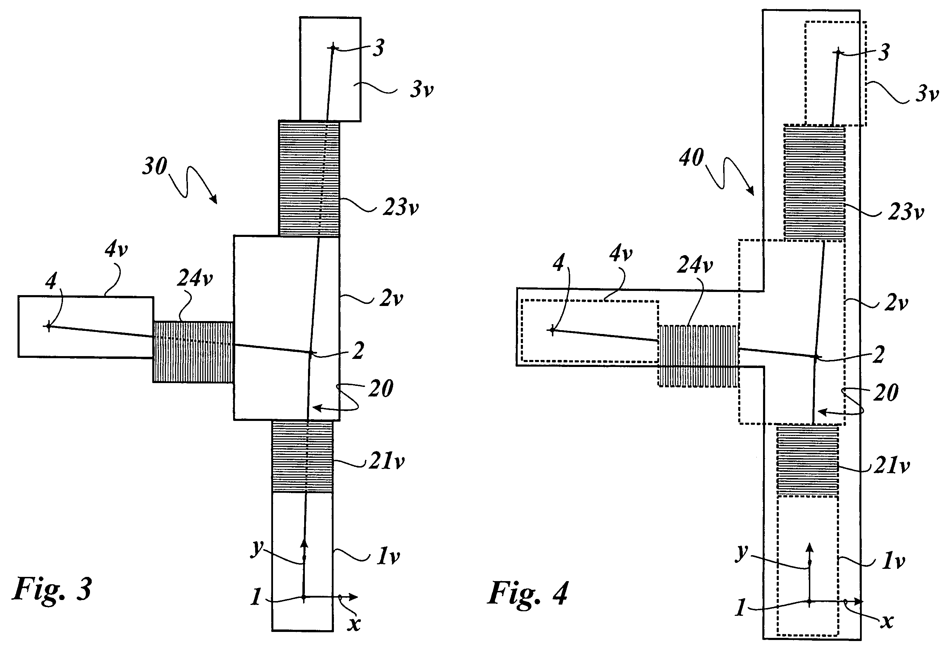

Fig. 3 zeigt nun das in eine Ebene abgewickelte Skelettmodell 20, wie es auch beispielsweise in einem 2D-Leiterplatten-Layoutprogramm dargestellt sein kann, wobei von dem in Fig. 2 dargestellten und im Fixpunkt 1 errichten Koordinatensystem nur die x- und y-Koordinate eingezeichnet sind. Die z-Koordinate könnte in einer derartigen 2D-Darstellung bedarfsweise als Höhenangabe erscheinen. Die Fixpunkte 1 bis 4 sowie das Skelettmodell 20 weisen jeweils einen Höhe Null auf. Jeder der Fixpunkte 2 bis 4 ist als Punkt Pᵢ' = Pᵢ' (xᵢ, yᵢ) beschreibbar und eindeutig mit der in Fig. 2 vorgesehenen dreidimensionalen Darstellung verknüpft, wie weiter oben beschrieben.

Weiter sind in Fig. 3 die Fixpunkte 1 bis 4 enthaltende Verbindungsebenen 1v bis 4v sowie Verbindungsabschnitte 21v, 23v und 24v dargestellt. Der Verbindungsabschnitt 21v verbindet die Verbindungsebenen 1v und 2v miteinander. Es handelt sich dabei um die Abwicklung eines Zylindermantels, wie in Fig. 2 beschrieben. Der Verbindungsabschnitt 23v verbindet die Verbindungsebenen 2v und 3v miteinander, der Verbindungsabschnitt 24v verbindet die Verbindungsebenen 2v und 4v miteinander. Auch bei den Verbindungsabschnitten 23v und 24v handelt es sich um Abwicklungen eines Zylindermantels.

Die Abmessungen der Verbindungsebenen 1v bis 4v sowie der Verbindungsabschnitte 21v, 23v und 24v, die einen Leiterplatten-Grobentwurf 30 bilden, sind zunächst in weiten Grenzen frei wählbar, sofern sie nicht die Innenabmessungen des Gehäuses 10 übersteigen. Es ist jedoch darauf zu achten, dass die Leiterplattenkontur im weiteren Verfahren so gewählt wird, dass innerhalb der Leiterplattenkontur kein Überlappungsbereich von Verbindungsabschnitten angeordnet ist. Dies würde zur Folge haben, dass die flexible Leiterplatte in solchen Bereichen mehrfach gebogen werden müsste, was im Allgemeinen zu plastischer Verformung und Rissen führen kann.

Fig. 4 zeigt nun einen Leiterplattenentwurf 40 (in Fig. 4 mit geschlossenem Linienzug dargestellt) mit einer im Wesentlichen T-förmig ausgebildeten Leiterplattenkontur, wobei nun innerhalb der Leiterplattenkontur ein Leiterplattenlayout entwickelt werden kann. Zum Vergleich ist der in Fig. 3 dargestellte Leiterplatten-Grobentwurf 30 mit punktierten Linien eingezeichnet. Das Leiterplattenlayout kann anhand eines vorgegebenen Schaltbildes und einer Auswahl verfügbarer Bauelemente entwickelt werden, wobei zumindest die geometrischen Abmessungen der ausgewählten Bauelemente bekannt sein müssen und in Form "virtueller" Bauelemente abrufbar und anordenbar sein müssen. Die virtuellen Bauelemente sind vorteilhafterweise im Datenspeicher eines Computers abgelegt. Das Erstellen eines solchen die Anordnung von Bauelementen und das Legen von Leiterbahnen im Wesentlichen umfassenden Leiterplattenlayouts kann in herkömmlicher computerunterstützer Weise erfolgen, wobei die geometrischen Daten der virtuellen Bauelemente aus dem Datenspeicher des Computers abrufbar sein können. Der Abruf kann beispielsweise in der Weise erfolgen, dass in einer graphischen Entwicklungsumgebung die Umrisse der Bauelemente dargestellt sind und die Bauelemente beispielsweise per "Mausklick" abrufbar und positionierbar sind.

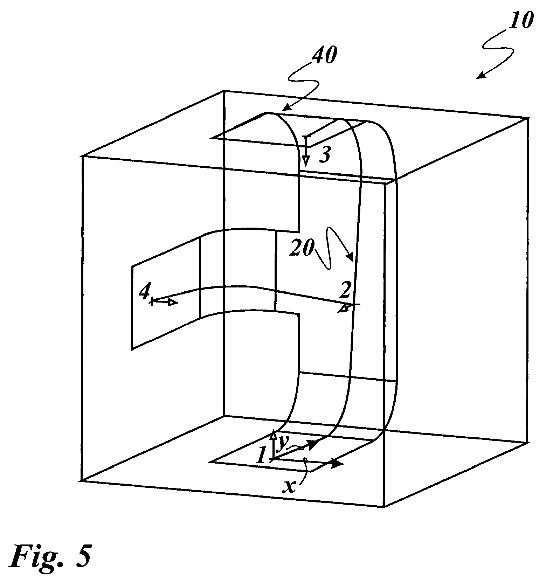

Fig. 5 zeigt nun den in das Gehäuse 10 (siehe Fig. 1) übertragenen Leiterplatten-Entwurf 40, wobei die auf der flexiblen Leiterplatte angeordneten virtuellen Bauelemente nicht dargestellt sind. Es ist nun in einem weiteren Schritt vorgesehen, den in das Gehäuse 10 übertragenen und mit virtuellen Bauelementen bestückten Leiterplatten-Entwurf 40 in der dreidimensionalen Darstellung auf Kollisionen zwischen den virtuellen Bauelementen einerseits und der Leiterplattenkontur andererseits und der Innenkontur des Gehäuses zu überprüfen und ggf. Korrekturen am Leiterplatten-Entwurf 40 vorzunehmen. Weiter ist vorgesehen, die Funktion der Schaltung störende gegenseitige Beeinflussungen, etwa von Bauelementen oder auch von Leiterbahnen, zu ermitteln. Sofern Kollisionen oder störende Beeinflussungen vorliegen, wird das Leiterplattenlayout und/oder die Auswahl der Bauelemente in der in Fig. 4 dargestellten 2D-Entwicklungsumgebung wiederholt und sodann der verbesserte Leiterplattenentwurf in der 3D-Umgebung (Fig. 5) nochmals wie beschrieben überprüft. Diese Schritte werden solange wiederholt, bis ein funktionsgerechter Leiterplattenentwurf ermittelt ist.

Die 2D-Entwicklungsumgebung und die 3D-Entwicklungsumgebung können bei dem erfindungsgemäßen Verfahren vorteilhafterweise durch ein gemeinsames Computerprogramm bereitgestellt werden, das Daten aus einem oder mehreren Datenspeichern bereitstellt und verwaltet. Die beiden Entwicklungsumgebungen können vorteilhafterweise auf einem oder mehren Bildschirmen bereitgestellt werden.

### Bezugszeichenliste

- 1 bis 4: Fixpunkt
- 1v bis 4v: Verbindungsebene
- 10: Gehäuse
- 20: Skelettmodell
- 21v: Verbindungsabschnitt
- 23v: Verbindungsabschnitt
- 24v: Verbindungsabschnitt
- 30: Leiterplatten-Grobentwurf
- 40: Leiterplatten-Entwurf

## Patentansprüche

1. Verfahren zur computergestützten Konstruktion einer flexiblen Leiterplatte, die in einem Gehäuse (10) eines Gerätes angeordnet ist,
**dadurch gekennzeichnet,**
**dass** folgende Schritte vorgesehen sind:
a) Erstellen eines 3D-Modells des Gehäuses (10),
b) Bestimmen von Fixpunkten (1 bis 4) der Leiterplatte, wie Befestigungspunkten und Anschlusspunkten, mit Angabe jeweils eines auf einer Innenwandfläche des Gehäuses (10) errichteten und nach innen weisenden Normaleneinheitsvektors und der Durchlaufrichtung,
c) Bestimmen von Verbindungsebenen, die die Fixpunkte (1 bis 4) enthalten,
d) Berechnung eines Skelettmodells (20) der Leiterplatte, wobei zwischen zwei benachbarten Fixpunkten (1 bis 4) mit unterschiedlichem Normaleneinheitsvektor die Schnittgerade der die Fixpunkte aufweisenden Verbindungsebenen (1v bis 4v) bestimmt wird,
e) Ersetzen der Schnittgeraden durch einen Verbindungsabschnitt (21v, 23v, 24v), wobei die die Schnittgerade ausbildenden Verbindungsebenen tangential in den Verbindungsabschnitt übergehen,
f) Erstellung einer Abwicklung des Skelettmodells (20) in eine Ebene,
g) Festlegen einer das Skelettmodell (20) einschließenden vorläufigen Leiterplattenkontur,
h) Erstellen eines Leiterplattenentwurfs (40), umfassend eine präzisierte Leiterplattenkontur und ein Leiterplattenlayout, in der Abwicklung,
i) Einfügen von virtuellen Bauelementen in den Leiterplattenentwurf (40);
k) Rückübertragen des mit den virtuellen Bauelementen bestückten Leiterplattenentwurfs (40) in das 3D-Modell des Gehäuses (10),
l) Ermittlung und Korrektur der Kollisionen zwischen den virtuellen Bauelementen einerseits und der Leiterplattenkontur oder der Innenkontur des Gehäuses im 3D-Modell des Gehäuses (10) andererseits oder zwischen den virtuellen Bauelementen untereinander oder der Leiterplattenkontur mit sich selbst,
m) Durchlaufen der Schritte h) bis k) sooft, bis keine Kollision mehr auftritt, wobei die Schritte a) bis m) in der oben genannten Reihenfolge oder in anderer Reihenfolge ausgeführt werden.

2. Verfahren nach Anspruch 1,
**dadurch gekennzeichnet,**
**dass** in Verfahrensschritt a) das 3D-Modell des Gehäuses (10) in einem Datenspeicher eines Computers abgelegt wird und dass in Verfahrensschritt b) die Fixpunkte (1 bis 4) der Leiterplatte aus dem Datenspeicher entnommen werden.

3. Verfahren nach Anspruch 1 oder 2,
**dadurch gekennzeichnet,**
**dass** das in Verfahrensschritt d) berechnete Skelettmodell (20) im Datenspeicher des Computers abgelegt wird.

4. Verfahren nach einem der vorangehenden Ansprüche,
**dadurch gekennzeichnet,**
**dass** die virtuellen Bauelemente im Datenspeicher des Computers abgelegt sind.

5. Verfahren nach einem der vorangehenden Ansprüche,
**dadurch gekennzeichnet,**
**dass** der Verbindungsabschnitt (21v, 23v, 24v) als gekrümmte Fläche ausgebildet ist.

6. Verfahren nach Anspruch 5,
**dadurch gekennzeichnet,**
**dass** die gekrümmte Fläche als Zylinderfläche ausgebildet ist.

7. Verfahren nach Anspruch 5,
**dadurch gekennzeichnet,**
**dass** der Verbindungsabschnitt (21v, 23v, 24v) als Kegelfläche ausgebildet ist.

8. Verfahren nach Anspruch 5,
**dadurch gekennzeichnet,**
**dass** der Verbindungsabschnitt (21 v, 23v, 24v) als Spiralfläche ausgebildet ist.

9. Verfahren nach einem der Ansprüche 5 bis 8,
**dadurch gekennzeichnet,**
**dass** Biegeradien gewählt werden, die größer als der Biegeradius sind, bei dem der lineare Elastizitätsbereich des Leiterplattenmaterials bei einer vorbestimmten Leiterplattendicke verlassen wird.

10. Verfahren nach Anspruch 9,
**dadurch gekennzeichnet,**
**dass** die zulässigen Biegeradien aus einer Vorzugstabelle ausgewählt werden.

11. Verfahren nach einem der vorangehenden Ansprüche,
**dadurch gekennzeichnet,**
**dass** zwei aufeinanderfolgende parallele Verbindungsebenen durch eine orthogonale Verbindungsebene verbunden werden.

12. Verfahren nach einem der Ansprüche 1 bis 10,
**dadurch gekennzeichnet,**
**dass** zwei aufeinanderfolgende nicht parallele Verbindungsebenen durch eine Verwindungsfläche verbunden werden.

13. Verfahren nach Anspruch 12,
**dadurch gekennzeichnet,**
**dass** die Verwindungsfläche mit einem Verwindungsradius ausgebildet ist, der größer als der Verwindungsradius ist, bei dem der lineare Elastizitätsbereich des Leiterplattenmaterials verlassen wird.

14. Verfahren nach einem der vorangehenden Ansprüche,
**dadurch gekennzeichnet,**
**dass** die Leiterplattenkontur so gewählt wird, dass innerhalb der Leiterplattenkontur kein Überlappungsbereich von Verbindungsabschnitten (21v, 23v, 24v) angeordnet ist.

15. Verfahren nach einem der vorangehenden Ansprüche,
**dadurch gekennzeichnet,**
**dass** das Verfahren auf Flachbandkabel angewendet wird.

16. Verfahren nach einem der Ansprüche 1 bis 14,
**dadurch gekennzeichnet,**
**dass** das Verfahren auf Bündel von Rundleiterkabeln angewendet wird.

## Claims

1. Method for the computer-supported construction of a flexible circuit board, which is arranged in a housing (10) of a device,
**characterised in that**
the following steps are provided:
a) creating a 3D model of the housing (10),
b) determining fixed points (1 to 4) of the circuit board, such as fastening points and connection points, specifying respectively a normal unit vector established on an inner wall surface of the housing (10) and pointing inwards, and the throughput direction,
c) determining connection planes which contain the fixed points (1 to 4),
d) calculating a skeleton model (20) of the circuit board, wherein the intersection line of the connection planes (1v to 4v) having the fixed points is determined between two adjacent fixed points (1 to 4) having different normal unit vectors,
e) replacing the intersection lines through a connection section (21v, 23v, 24v), wherein the connection planes forming the intersection line pass tangentially into the connection section,
f) creating a developed version of the skeleton model (20) in a plane,
g) specifying a provisional circuit board contour enclosing the skeleton model (20),
h) creating a circuit board design (40), comprising a refined circuit board contour and a circuit board layout, in the developed version,
i) inserting virtual components into the circuit board design (40);
k) retransferring the circuit board design (40) fitted with the virtual components into the 3D model of the housing (10),
l) determining and correcting the collisions between the virtual components on the one hand and the circuit board contour or the inner contour of the housing in the 3D model of the housing (10) on the other hand, or between the virtual components among themselves or the circuit board contour with itself,
m) passing through steps h) to k) until no collision occurs any longer, wherein steps a) to m) are carried out in the aforementioned order or in a different order.

2. Method according to claim 1,
**characterised in that**
in method step a), the 3D model of the housing (10) is deposited in a data memory of a computer and, in method step b), the fixed points (1 to 4) of the circuit board are taken from the data memory.

3. Method according to claim 1 or 2,
**characterised in that**
the skeleton model (20) calculated in method step d) is deposited in the data memory of the computer.

4. Method according to one of the preceding claims,
**characterised in that**
the virtual components are deposited in the data memory of the computer.

5. Method according to one of the preceding claims,
**characterised in that**
the connection section (21v, 23v, 24v) is formed as a curved surface.

6. Method according to claim 5,
**characterised in that**
the curved surface is formed as a cylinder surface

7. Method according to claim 5
**characterised in that**
the connection section (21v, 23v, 24v) is formed as a cone surface.

8. Method according to claim 5,
**characterised in that**
the connection section (21, 23v, 24v) is formed as a spiral surface.

9. Method according to one of claims 5 to 8,
**characterised in that**
bending radii are selected which are greater than the bending radius at which the linear elasticity range of the circuit board material at a predetermined circuit board thickness is left.

10. Method according to claim 9,
**characterised in that**
the admissible bending radii are selected from a preference table.

11. Method according to one of the preceding claims,
**characterised in that**
two consecutive parallel connection planes are connected by an orthogonal connection plane.

12. Method according to one of claims 1 to 10,
**characterised in that**
two consecutive, non-parallel connection planes are connected by a torsional surface.

13. Method according to claim 12,
**characterised in that**
the torsional surface is formed with a torsional radius which is greater than the torsional radius at which the linear elasticity range of the circuit board material is left.

14. Method according to one of the preceding claims,
**characterised in that**
the circuit board contour is selected such that no overlapping region of connection sections (21v, 23v, 24v) is arranged within the circuit board contour.

15. Method according to one of the preceding claims,
**characterised in that**
the method is applied to flat ribbon cable.

16. Method according to one of claims 1 to 14,
**characterised in that**
the method is applied to bundles of round conductor cables.

## Revendications

1. Procédé de réalisation assistée par ordinateur d'une carte de circuit imprimé souple qui est disposée dans un boîtier (10) d'un appareil,
**caractérisé en ce que**
les étapes suivantes sont prévues :
a) établissement d'un modèle 3D du boîtier (10),
b) définition de points fixes (1 à 4) de la carte de circuit imprimé, tels que des points de fixation et des points de connexion, avec indication respectivement d'un vecteur unitaire normal construit sur une face de paroi intérieure du boîtier (10) et dirigé vers l'intérieur, et de la direction de passage,
c) définition de plans de raccordement qui contiennent les points fixes (1 à 4),
d) calcul d'un modèle de squelette (20) de la carte de circuit imprimé, la droite d'intersection des plans de raccordement (1v à 4v) présentant les points fixes étant définie entre deux points fixes (1 à 4) avec un vecteur unitaire normal différent,
e) remplacement de la droite d'intersection par un tronçon de raccordement (21 v, 23v, 24v), les plans de raccordement constituant la droite d'intersection se transformant tangentiellement en tronçon de raccordement,
f) établissement d'une projection développée du modèle de squelette (20) dans un plan,
g) spécification d'un contour de carte de circuit imprimé provisoire incluant le modèle de squelette (20),
h) établissement d'un projet de carte de circuit imprimé (40), comprenant un contour de carte de circuit imprimé précisé et un tracé de carte de circuit imprimé, dans la projection développée,
i) insertion d'éléments constitutifs virtuels dans le projet de carte de circuit imprimé (40) ;
k) transfert en retour dans le modèle 3D du boîtier (10) du projet de carte de circuit imprimé (40) équipé des éléments constitutifs virtuels,
l) détection et correction des collisions entre les éléments constitutifs virtuels d'une part et le contour de carte de circuit imprimé ou le contour intérieur du boîtier dans le modèle 3D du boîtier (10) d'autre part ou entre les éléments constitutifs virtuels entre eux ou du contour de carte de circuit imprimé avec lui-même
m) réalisation des étapes h) à k) de façon répétée jusqu'à ce qu'il ne se produise plus de collision, les étapes a) à m) étant exécutées dans l'ordre cité plus haut ou dans un autre ordre.

2. Procédé selon la revendication 1,
**caractérisé en ce que**,
dans l'étape de procédé a), le modèle 3D du boîtier (10) est enregistré dans une mémoire de données d'un ordinateur, et **en ce que**, dans l'étape de procédé b), les points fixes (1 à 4) de la carte de circuit imprimé sont extraits de la mémoire de données.

3. Procédé selon la revendication 1 ou 2,
**caractérisé en ce que**
le modèle de squelette (20) calculé dans l'étape de procédé d) est enregistré dans la mémoire de données de l'ordinateur.

4. Procédé selon l'une des revendications précédentes,
**caractérisé en ce que**
les éléments constitutifs virtuels sont enregistrés dans la mémoire de données de l'ordinateur.

5. Procédé selon l'une des revendications précédentes,
**caractérisé en ce que**
le tronçon de raccordement (21v, 23v, 24v) est constitué en tant que face courbée.

6. Procédé selon la revendication 5,
**caractérisé en ce que**
la face courbée est constituée en tant que face cylindrique.

7. Procédé selon la revendication 5,
**caractérisé en ce que**
le tronçon de raccordement (21v, 23v, 24v) est constitué en tant que face conique.

8. Procédé selon la revendication 5,
**caractérisé en ce que**
le tronçon de raccordement (21v, 23v, 24v) est constitué en tant que face spiralée.

9. Procédé selon l'une des revendications 5 à 8,
**caractérisé en ce**
**qu'**il est choisi des rayons de courbure qui sont plus grands que le rayon de courbure pour lequel la zone d'élasticité linéaire du matériau de carte de circuit imprimé est quittée pour une épaisseur prédéfinie de carte de circuit imprimé.

10. Procédé selon la revendication 9,
**caractérisé en ce que**
les rayons de courbure admissibles sont sélectionnés dans un tableau des préférences.

11. Procédé selon l'une des revendications précédentes,
**caractérisé en ce que**
deux plans de raccordement parallèles qui se suivent sont raccordés par un plan de raccordement orthogonal.

12. Procédé selon l'une des revendications 1 à 10,
**caractérisé en ce que**
deux plans de raccordement non parallèles qui se suivent sont raccordés par un plan de distorsion.

13. Procédé selon la revendication 12,
**caractérisé en ce que**
le plan de distorsion est constitué avec un rayon de distorsion qui est plus grand que le rayon de distorsion pour lequel la zone d'élasticité linéaire du matériau de carte de circuit imprimé est quittée.

14. Procédé selon l'une des revendications précédentes,
**caractérisé en ce que**
le contour de carte de circuit imprimé est choisi de telle sorte que, à l'intérieur du contour de carte de circuit imprimé, il n'est disposé aucune zone de chevauchement de tronçons de raccordement (21v, 23v, 24v).

15. Procédé selon l'une des revendications précédentes,
**caractérisé en ce que**
le procédé est appliqué sur des câbles plats.

16. Procédé selon l'une des revendications 1 à 14,
**caractérisé en ce que**
le procédé est appliqué sur des faisceaux de câbles à conducteurs ronds.
